(19) **Europäisches Patentamt**

**European Patent Office**

**Office européen des brevets**

(11) **EP 1 263 021 A1**

(12) **EUROPÄISCHE PATENTANMELDUNG**

(43) Veröffentlichungstag:
**04.12.2002 Patentblatt 2002/49**

(51) Int Cl.⁷: **H01J 65/04**, H01J 61/067

(21) Anmeldenummer: **02100572.3**

(22) Anmeldetag: **29.05.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **01.06.2001 DE 10126958**

(71) Anmelder:
• **Philips Corporate Intellectual Property GmbH**
  **20099 Hamburg (DE)**
• **Koninklijke Philips Electronics N.V.**
  **5621 BA Eindhoven (NL)**

(72) Erfinder:
• **Groen, Wilhelm-Albert c/o Philips Corporate**
  **52066, Aachen (DE)**
• **Albertsen, Knuth c/o Philips Corporate**
  **52066, Aachen (DE)**
• **Rausenberger, Bernd c/o Philips Corporate**
  **52066, Aachen (DE)**

(74) Vertreter: **Volmer, Georg, Dipl.-Ing. et al**
**Philips Corporate Intellectual Property GmbH,**
**Postfach 50 04 42**
**52088 Aachen (DE)**

(54) **Flüssigkristallbildschirm mit verbesserter Hintergrundbeleuchtung**

(57)     Flüssigkristallbildschirm ausgestattet mit einem Hintergrundbeleuchtungssystem, welches wenigstens eine Gasentladungslampe mit einem Entladungsgefäß (5) und wenigstens einem kapazitiven Einkoppelmittel (6) mit einem dielektrischen Material der Zusammensetzung $[A'_{a1}{}^{n1+} A''_{a2}{}^{n2+}...A^n{}_{an}{}^{nn+}][B'_{b1}{}^{m1+} B''_{b2}{}^{m2+}....B^m{}_{bm}{}^{mm}]O_3$ enthält, wobei die Kationen $A'_{a1}{}^{n1+} A''_{a2}{}^{n2+}...A^n{}_{an}{}^{nn+}$ mindestens ein oder mehrere Kationen ausgewählt aus der Gruppe $Ba^{2+}$, $Pb^{2+}$, $Sr^{2+}$ und $Ca^{2+}$ sowie gegebenenfalls ein oder mehrere Kationen ausgewählt aus der Gruppe $Cs^{1+}$, $Rb^{1+,}$ $Tl^{1+}$, $K^{1+}$, $Pb^{2+}$, $Ag^{1+}$, $Sr^{2+}$, $Na^{1+}$, $Bi^{3+}$, $La^{3+}$, $Mg^{2+}$, $Zn^{2+}$, $Ca^{2+}$, $Ce^{3+}$, $Cd^{2+}$, $Pr^{3+}$, $Nd^{3+}$, $Eu^{3+}$, $Gd^{3+}$ und $Sm^{3+}$ umfassen,
die Kationen $B'_{b1}{}^{m1+} B''_{b2}{}^{m2+}....B^m{}_{bm}{}^{mm}$ mindestens ein oder mehrere Kationen ausgewählt aus der Gruppe $Ti^{4+}$, $Zr^{4+}$ und $Sn^{4+}$ sowie gegebenenfalls ein oder mehrere Kationen aus der Gruppe $Mn^{2+}$, $Cr^{2+}$, $In^{3+}$, $V^{2+}$, $Fe^{2+}$, $Pb^{4+}$, $Li^{1+}$, $Co^{2+}$, $Sc^{3+}$, $Zn^{2+}$, $Cu^{2+}$, $U^{6+}$, $Mg^{2+}$, $Hf^{4+}$, $Mo^{3+}$, $Ni^{2+}$, $Nb^{4+}$, $Ti^{3+}$,$W^{4+}$, $Mo^{4+}$, $Fe^{3+}$, $Mn^{3+}$,$V^{3+}$, $Re^{4+}$, $Ir^{4+}$, $Ru^{4+}$, $W^{5+}$, $Ta^{5+}$, $Cr^{3+}$, $Ga^{3+}$, $Co^{3+}$, $Mo^{5+}$, $Ni^{3+}$, $Sb^{5+}$, $W^{6+}$, $Nb^{5+}$, $Mo^{6+}$, $Fe^{4+}$, $Re^{5+}$, $V^{4+}$, $Te^{6+}$, $V^{5+}$, $Cu^{3+}$, $Al^{3+}$, $Mn^{4+}$ $Ge^{4+}$, $Y^{3+}$, $Gd^{3+}$ $Dy^{3+}$, $Ho^{3+}$, $Er^{3+}$, $Yb^{3+}$, $Tb^{3+}$ und $Lu^{3+}$ umfassen,

$$0.98 \leq a_1 + a_2 + .... + a_n \leq 1.02,$$

$$0.98 \leq b_1 + b_2 + .... + b_m \leq 1.02,$$

$$a_1 + a_2 + .... + a_n + b_1 + b_2 + .... + b_m \leq 2,$$

$$a_1{}^*n_1 + a_2{}^*n_2 + ... + a_n{}^*n_n + b_1{}^*m_1 + b_2{}^*m_2 + ... + b_m{}^*m_m \leq 6 \text{ ist.}$$

**EP 1 263 021 A1**

# FIG. 2

**Beschreibung**

Die Erfindung betrifft einen Flüssigkristallbildschirm ausgestattet mit einem Hintergrundbeleuchtungssystem, welches wenigstens eine Gasentladungslampe mit einem Entladungsgefäß und wenigstens einem kapazitiven Einkoppelmittel mit einem dielektrischem Material enthält. Weiterhin betrifft die Erfindung ein Hintergrundbeleuchtungssystem mit wenigstens einer Gasentladungslampe sowie eine Gasentladungslampe.

Flüssigkristallbildschirme sind passive Anzeigesysteme, das heißt, sie leuchten nicht selber. Diese Bildschirme beruhen auf dem Prinzip, dass Licht die Schicht aus Flüssigkristallen passiert oder auch nicht. Dies bedeutet, dass eine externe Lichtquelle benötigt wird, um ein Bild zu erzeugen. In reflektiven Flüssigkristallbildschirmen wird das Umgebungslicht als externe Lichtquelle benutzt. Bei transmissiven Flüssigkristallbildschirmen wird in einem Hintergrundbeleuchtungssystem künstliches Licht erzeugt.

Hintergrundsbeleuchtungssystem können als Lichtquelle eine Gasentladungslampe aufweisen. Neben der Erzeugung von Elektronen an sogenannten heißen Elektroden durch Glühemission kann die Gasentladung auch durch Emission von Elektronen in einem starken elektrischen Feld oder direkt durch Ionenbeschuss (ioneninduzierte Sekundäremission) hervorgerufen werden. Bei einer kapazitiven Betriebsart werden kapazitive Einkoppelmittel als Elektroden verwendet. Diese kapazitiven Einkoppelmittel sind aus einem dielektrischen Material gebildet, das auf einer Seite Kontakt mit dem Entladungsgas hat und auf der anderen Seite elektrisch leitfähig mit einem äußeren Stromkreis verbunden ist. Durch eine an die kapazitive Einkoppelmittel angelegte Wechselspannung wird in dem Entladungsgefäß ein elektrisches Wechselfeld erzeugt, in dem sich die Elektronen bewegen und in bekannter Weise eine Gasentladung anregen.

Aus der DE 199 15 616 ist eine derartige Gasentladungslampe bekannt, in der anstelle der sonst üblichen Metallelektroden ein gesintertes, ferroelektrisches Material als kapazitive Einkoppelmittel verwendet wird. Als gesintertes, ferroelektrisches Material wurde vorzugsweise $Ba(Ti_{0.91}Zr_{0.09})O_3$ mit Dotierungen aus bestimmten Donator/Akzeptor-Kombinationen verwendet. Das beschriebene Material weist eine hohe Dielektrizitätskonstante und eine rechteckige Hystereschleife auf.

Nachteilig bei dem verwendeten Materialien ist, dass das Material grobkörnig ist. Damit weist das kapazitive Einkoppelmittel eine verringerte mechanische Festigkeit auf. Ein weiterer Nachteil ist, dass mit 80 °C die Curie-Temperatur des ferroelektrischen Materials und somit die Betriebstemperatur der Gasentladungslampe sehr niedrig ist.

Es ist deshalb eine Aufgabe der Erfindung, die Nachteile des Standes der Technik zu umgehen und einen Flüssigkristallbildschirm mit verbesserter Hintergrundbeleuchtung, insbesondere mit verbesserter Lichtquelle, bereitzustellen.

Diese Aufgabe wird gelöst durch einen Flüssigkristallbildschirm ausgestattet mit einem Hintergrund beleuchtungssystem, welches wenigstens eine Gasentladungslampe mit einem Entladungsgefäß und wenigstens einem kapazitiven Einkoppelmittel mit einem dielektrischen Material der Zusammensetzung $[A'_{a1}{}^{n1+} A''_{a2}{}^{n2+}...A^{n'}{}_{an}{}^{nn+}]$ $[B'_{b1}{}^{m1+} B''_{b2}{}^{m2+}....B^{m'}{}_{bm}{}^{mn+}]O_3$ enthält, wobei die Kationen $A'_{a1}{}^{n1+} A''_{a2}{}^{n2+}...A^{n'}{}_{an}{}^{nn+}$ mindestens ein oder mehrere Kationen ausgewählt aus der Gruppe $Ba^{2+}$, $Pb^{2+}$, $Sr^{2+}$ und $Ca^{2+}$ sowie gegebenenfalls ein oder mehrere Kationen ausgewählt aus der Gruppe $Cs^{1+}$, $Rb^{1+}$, $Tl^{1+}$, $K^{1+}$, $Pb^{2+}$, $Ag^{1+}$, $Sr^{2+}$, $Na^{1+}$, $Bi^{3+}$, $La^{3+}$, $Mg^{2+}$, $Zn^{2+}$, $Ca^{2+}$, $Ce^{3+}$, $Cd^{2+}$, $Pr^{3+}$, $Nd^{3+}$, $Eu^{3+}$, $Gd^{3+}$ und $Sm^{3+}$ umfassen, die Kationen $B'_{b1}{}^{m1+} B''_{b2}{}^{m2+}....B^{m'}{}_{bm}{}^{mn+}$ mindestens ein oder mehrere Kationen ausgewählt aus der Gruppe $Ti^{4+}$, $Zr^{4+}$ und $Sn^{4+}$ sowie gegebenenfalls ein oder mehrere Kationen aus der Gruppe $Mn^{2+}$, $Cr^{2+}$, $In^{3+}$, $V^{2+}$, $Fe^{2+}$, $Pb^{4+}$, $Li^{1+}$, $Co^{2+}$, $Sc^{3+}$, $Zn^{2+}$, $Cu^{2+}$, $U^{6+}$, $Mg^{2+}$, $Hf^{4+}$, $Mo^{3+}$, $Ni^{2+}$, $Nb^{4+}$, $Ti^{3+}$, $W^{4+}$, $Mo^{4+}$, $Fe^{3+}$, $Mn^{3+}$, $V^{3+}$, $Re^{4+}$, $Ir^{4+}$, $Ru^{4+}$, $W^{5+}$, $Ta^{5+}$, $Cr^{3+}$, $Ga^{3+}$, $Co^{3+}$, $Mo^{5+}$, $Ni^{3+}$, $Sb^{5+}$, $W^{6+}$, $Nb^{5+}$, $Mo^{6+}$, $Fe^{4+}$, $Re^{5+}$, $V^{4+}$, $Te^{6+}$, $V^{5+}$, $Cu^{3+}$, $Al^{3+}$, $Mn^{4+}$, $Ge^{4+}$, $Y^{3+}$, $Gd^{3+}$, $Dy^{3+}$, $Ho^{3+}$, $Er^{3+}$, $Yb^{3+}$, $Tb^{3+}$ und $Lu^{3+}$ umfassen,

$$0.98 \leq a_1 + a_2 + .... + a_n \leq 1.02,$$
$$0.98 \leq b_1 + b_2 + .... + b_m \leq 1.02,$$
$$a_1 + a_2 + .... + a_n + b_1 + b_2 + .... + b_m \leq 2,$$
$$a_1 * n^1 + a_2 * n^2 + ...+ a_n * n^n + b_1 * m^1 + b_2 * m^2 + ... + b_m * m^m \leq 6 \text{ ist.}$$

Durch die Verwendung der erfindungsgemäßen dielektrischen Materialien in dem kapazitiven Einkoppelmittel der Gasentladungslampe wird ein Flüssigkristallbildschirm mit verbesserten Eigenschaften erhalten. Die erfindungsgemäßen Materialien lassen sich mit relativ kleinen Korngrößen ($\leq 20~\mu m$) herstellen. Das kapazitive Einkoppelmittel, welches ein erfindungsgemäßes dielektrisches Material enthält, weist dadurch eine höhere mechanische Festigkeit auf und ist somit deutlich langlebiger. Durch die erhöhte Durchschlagfestigkeit kann ein kapazitives Einkoppelmittel mit dünnerer Schichtdicke hergestellt werden. Ein weiterer Vorteil ist, dass die dielektrischen Materialien im Vergleich zu dem oben genannten Stand der Technik einen niedrigeren Kathodenfall, dass heißt niedrigere Verluste bei der Einkopplung des Stroms in die Gasentladungslampe, aufweisen. Insgesamt wird dadurch eine effizientere Gasentladungslampe erhalten. Ein weiterer Vorteil ist, dass die erfindungsgemäßen dielektrischen Materialien eine festere Verbindung mit Glas eingehen. Dies erhöht die Vakuumdichtigkeit der Gasentladungslampe. Weiterhin weisen die erfindungsgemäßen dielektrischen Materialien eine Curie-Temperatur größer 80 °C auf.

Es ist bevorzugt, dass die Kationen $A'_{a1}{}^{n1+}$

$A''_{a2}^{n2+}...A^{n'}_{an}^{nn+}$ Ba$^{2+}$ umfassen und die Kationen $B'_{b1}^{m1+}$ $B''_{b2}^{m2+}....B^{m'}_{bm}^{mn+}$ Nb$^{5+}$, Co$^{2+}$ und Mn$^{3+}$ umfassen.

Ein kapazitives Einkoppelmittel mit diesem dielektrischen Material zeichnet sich durch eine hohe Festigkeit, einen niedrigen Kathodenfall und einer Curie-Temperatur von 125 °C aus.

Weiterhin kann es bevorzugt sein, dass das kapazitive Einkoppelmittel zusätzlich ein Sinterhilfsmittel enthält.

Es ist ganz besonders bevorzugt, dass das Sinterhilfsmittel SiO$_2$ ist.

Durch Sinterhilfsmittel wird die Herstellung des kapazitiven Einkoppelmittels verbessert. Weiterhin kann das Sinterhilfsmittel die Eigenschaften des dielektrischen Materials, und somit des kapazitiven Einkoppelmittels, vorteilhaft beeinflussen.

Es ist ganz besonders bevorzugt, dass die Kationen $A'_{a1}^{n1+}$ $A''_{a2}^{n2+}...A^{n'}_{an}^{nn+}$ Ba$^{2+}$ und Mg$^{2+}$ umfassen, die Kationen $B'_{b1}^{m1+}$ $B''_{b2}^{m2+}....B^{m'}_{bm}^{mn+}$ Y$^{3+}$, W$^{6+}$, Mo$^{6+}$ und Mn$^{2+}$ umfassen und die zusätzliche Verbindung SiO$_2$ ist.

Ein kapazitives Einkoppelmittel mit diesem dielektrischen Material zeichnet sich durch eine hohe Festigkeit, einen niedrigen Kathodenfall und einer Curie-Temperatur von 125 °C aus.

Weiterhin betrifft die Erfindung ein Hintergrundbeleuchtungssystem, welches wenigstens eine Gasentladungslampe enthält, sowie eine Gasentladungslampe mit einem Entladungsgefäß und wenigstens einem kapazitiven Einkoppelmittel mit einem dielektrischen Material der Zusammensetzung $[A'_{a1}^{n1+}$ $A''_{a2}^{n2+}...A^{n'}_{an}^{nn+}]$ $[B'_{b1}^{m1+}$ $B''_{b2}^{m2+}....B^{m'}_{bm}^{mn+}]O_3$, wobei die Kationen $A'_{a1}^{n1+}$ $A''_{a2}^{n2+}...A^{n'}_{an}^{nn+}$ mindestens ein oder mehrere Kationen ausgewählt aus der Gruppe Ba$^{2+}$, Pb$^{2+}$, Sr$^{2+}$ und Ca$^{2+}$ sowie gegebenenfalls ein oder mehrere Kationen ausgewählt aus der Gruppe Cs$^{1+}$, Rb$^{1+}$, Tl$^{1+}$, K$^{1+}$, Pb$^{2+}$, Ag$^{1+}$, Sr$^{2+}$, Na$^{1+}$, Bi$^{3+}$, La$^{3+}$, Mg$^{2+}$, Zn$^{2+}$, Ca$^{2+}$, Ce$^{3+}$, Cd$^{2+}$, Pr$^{3+}$, Nd$^{3+}$, Eu$^{3+}$, Gd$^{3+}$ und Sm$^{3+}$ umfassen,
die Kationen $B'_{b1}^{m1+}$ $B''_{b2}^{m2+}....B^{m'}_{bm}^{mn+}$ mindestens ein oder mehrere Kationen ausgewählt aus der Gruppe Ti$^{4+}$, Zr$^{4+}$ und Sn$^{4+}$ sowie gegebenenfalls ein oder mehrere Kationen aus der Gruppe Mn$^{2+}$, Cr$^{2+}$, In$^{3+}$, V$^{2+}$, Fe$^{2+}$, Pb$^{4+}$, Li$^{1+}$, Co$^{2+}$, Sc$^{3+}$, Zn$^{2+}$, Cu$^{2+}$, U$^{6+}$, Mg$^{2+}$, Hf$^{4+}$, Mo$^{3+}$, Ni$^{2+}$, Nb$^{4+}$, Ti$^{3+}$, W$^{4+}$, Mo$^{4+}$, Fe$^{3+}$, Mn$^{3+}$, V$^{3+}$, Re$^{4+}$, Ir$^{4+}$, Ru$^{4+}$, W$^{5+}$, Ta$^{5+}$, Cr$^{3+}$, Ga$^{3+}$, Co$^{3+}$, Mo$^{5+}$, Ni$^{3+}$, Sb$^{5+}$, W$^{6+}$, Nb$^{5+}$, Mo$^{6+}$, Fe$^{4+}$, Re$^{5+}$, V$^{4+}$, Te$^{6+}$, V$^{5+}$, Cu$^{3+}$, Al$^{3+}$, Mn$^{4+}$, Ge$^{4+}$, Y$^{3+}$, Gd$^{3+}$, Dy$^{3+}$, Ho$^{3+}$, Er$^{3+}$, Yb$^{3+}$, Tb$^{3+}$ und Lu$^{3+}$ umfassen,

$$0.98 \leq a_1 + a_2 + ....+ a_n \leq 1.02,$$
$$0.98 \leq b_1 + b_2 + .... + b_m \leq 1.02,$$
$$a_1 + a_2 + .... + a_n + b_1 + b_2 + .... + b_m \leq 2,$$
$$a_1 * n^1 + a_2 * n^2 + ... + a_n * n^n + b_1 * m^1 + b_2 * m^2 + ... + b_m * m^m \leq 6 \text{ ist.}$$

Weitere Einzelheiten, Merkmale und Vorteile der Erfindung ergeben sich aus der folgenden Beschreibung von bevorzugten Ausführungsformen anhand der Zeichnungen. Dabei zeigt

Fig. 1 den schematischen Aufbau eines Hintergrundbeleuchtungssystems,

Fig. 2 eine schematische Darstellung einer Gasentladungslampe und

Fig. 3 eine schematische Darstellung eines kapazitiven Einkoppelmittel im Querschnitt.

Ein Flüssigkristallbildschirm weist üblicherweise eine Flüssigkristalleinheit und ein Hintergrundsbeleuchtungssystem auf. Die Flüssigkristalleinheit umfasst einen ersten und einen zweiten Polarisator sowie eine Flüssigkristallzelle, welche zwei transparente Platten aufweist, diejeweils eine Matrix aus lichtdurchlässigen Elektroden tragen. Zwischen den beiden transparenten Platten ist ein Flüssigkristallmaterial angeordnet. Das Flüssigkristallmaterial enthält beispielsweise TN (twisted nematic)-Flüssigkristalle, STN(super twisted nematic)-Flüssigkristalle, DSTN(double super twisted nematic)-Flüssigkristalle, FSTN(foil super twisted nematic)-Flüssigkristalle, VAN(vertically alligned)-Flüssigkristalle oder OCB(optically compensated bend)-Flüssigkristalle. Die Flüssigkristallzelle ist sandwichartig von den zwei Polarisatoren, wobei der zweite Polarisator vom Betrachter gesehen werden kann, umschlossen.

Zur Erzeugung und Darstellung von farbigen Bildern wird die Flüssigkristalleinheit mit einem Farbfilter versehen. Der Farbfilter enthält mosaikartig gemusterte Pixel, die entweder rotes, grünes oder blaues Licht durchlassen. Der Farbfilter ist vorzugsweise zwischen dem ersten Polarisator und der Flüssigkristallzelle angeordnet.

Das Hintergrundbeleuchtungssystem kann ein beispielsweise ein "Direct-Lit"-Hintergrundsbeleuchtungssystem oder ein "Side-Lit"-Hintergrundbeleuchtungssystem, welches einen Lichtleiter und eine Auskoppelstruktur aufweist, sein.

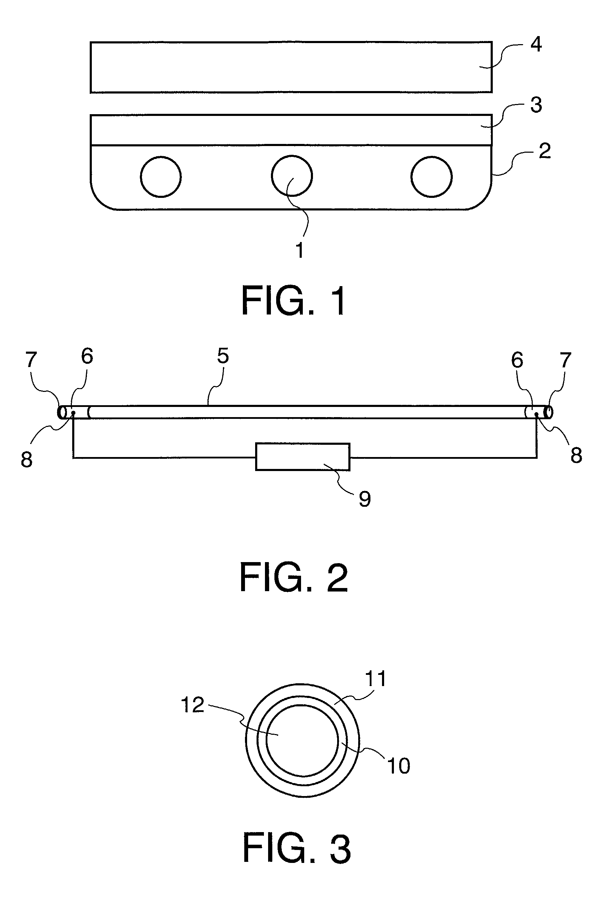

Ein Hintergrundbeleuchtungssystem weist gemäß Fig. 1 eine Lichtquelle 1 auf, die sich meist in einem Gehäuse 2 befindet, welches vorzugsweise auf der Innenseite einen Reflektor aufweist. Das Hintergrundsbeleuchtungssystem kann weiterhin eine Diffusorplatte 3 und einen Kollimator 4 aufweisen.

Die Lichtquelle 1, welche eine Gasentladungslampe mit wenigstens einem kapazitiven Einkoppelmittel 6 ist, emittiert vorzugsweise weißes oder nahezu weißes Licht.

In Fig. 2 ist eine mögliche Ausführungsform einer Gasentladungslampe mit zwei kapazitiven Einkoppelmitteln gezeigt. Die Gasentladungslampe weist als Entladungsgefäß 5 ein Glasrohr auf. Das von innen mit einem Leuchtstoff oder mit einer Leuchtstoffkombination beschichtete Entladungsgefäß 5 besitzt vorzugsweise einen Innendurchmesser von 3 mm, einen Außendurchmesser von 4 mm, eine Länge von 40 cm und ist mit 50 mbar Ar und 5 mg Hg gefüllt. Ein kapazitives Einkoppelmittel 6 an beiden Enden wird jeweils von einem zylinderförmigen Rohr mit einem erfindungsgemäßen dielektrischen Material gebildet. Das kapazitive Einkoppelmittel 6 hat vorzugsweise einen Außendurchmesser von 4 mm bei einer Wanddicke von 0,5 mm und einer Länge von 10 mm. Das Entladungsgefäß 5 wird durch das kapazitive Einkoppelmittel 6, die den gleichen Innendurchmesser besitzt, mittels eines Lötverfahrens vakuumdicht mit einer scheibenförmigen, dielektrischen Kappe 7 verschlossen. Auf der Außenseitejedes kapazitiven Einkoppelmittels 6 ist eine Schicht Silberpaste aufgebracht, die zuvor ausgebrannt wurde, so dass sie als eine elektrische Kontaktierung 8 wirkt. Mittels dieser elektrischen Kontaktierung 8 wird die Gasentladungslampe mit einem externen Stromnetz verbunden. Als externes Stromnetz dient in diesem Ausführungsbeispiel eine Lampentreiberschaltung 9, die bei 40 kHz und einer mittleren Spannung von etwa 350 V einen Strom von 30 mA liefert. Die Lampe liefert im stationären Betrieb einen Lichtstrom von ungefähr 600 Lumen. Der Treiber 9 enthält ferner einen Teil zum Zünden der Gasentladungslampe, der kurzfristig Spannungen von 1500 V zu liefern in der Lage ist. Nach der Zündung bildet sich eine stationäre Gasentladung aus. Elektronen gelangen auf die Oberfläche des dielektrischen Materials des kapazitiven Einkoppelmittels 6 und bleiben dort haften, was zu einer Erhöhung des ioneninduzierten Sekundäremissionskoeffizienten $\gamma$ führt. Dadurch wird die Effizienz der Gasentladungslampe erhöht.

Die Fig. 3 zeigt eine schematische Darstellung eines erfindungsgemäßen kapazitiven Einkoppelmittels 6 im Querschnitt. Der, mit einem Füllgas gefüllte, Innenraum 12 wird von einer dielektrischen Schicht 10, welche ein erfindungsgemäßes dielektrisches Material enthält, umgeben. Auf der dielektrischen Schichten 10 ist eine Metallisierungsschicht 11 aufgebracht, die zur elektrischen Kontaktierung dient. Alternativ kann auf der dielektrischen Schicht 10, d. h. auf der Seite zum Innenraum, eine weitere dünne dielektrische Schicht als Schutzschicht aufgebracht sein.

Für das Füllgas im Entladungsgefäß 5 wird vorzugsweise eine Mischung gewählt, die wenigstens ein Edelgas oder ein Edelgas und Quecksilber enthält. Für die erfindungsgemäße Lampe können eine Vielzahl von Gasmischungen als Füllgas verwendet werden. Insbesondere können die in bekannten Niederdruckgasentladungslampen verwendeten Füllgase eingesetzt werden.

Als dielektrische Materialien für das kapazitiven Einkoppelmittel 6 können beispielsweise $BaTiO_3$, $PbTiO_3$, $SrTiO_3$, $CaTiO_3$, $BaZrO_3$, $BaSnO_3$, $PbZrO_3$, $PbSnO_3$, $SrSnO_3$, $SrZrO_3$, $CaZrO_3$, $CaSnO_3$ oder Mischkristalle aus zwei oder mehr dieser Verbindungen verwendet werden. Außerdem können dielektrische Materialien verwendet werden, welche $BaTiO_3$, $PbTiO_3$, $SrTiO_3$, $CaTiO_3$, $BaZrO_3$, $BaSnO_3$, $PbZrO_3$, $PbSnO_3$, $SrSnO_3$, $SrZrO_3$, $CaZrO_3$, $CaSnO_3$ oder Mischkristalle dieser Verbindungen sowie ein oder mehrere Kationen ausgewählt aus der Gruppe $Cs^{1+}$, $Rb^{1+}$, $Tl^{1+}$, $K^{1+}$, $Pb^{2+}$, $Ag^{1+}$, $Sr^{2+}$, $Na^{1+}$, $Bi^{3+}$, $La^{3+}$, $Mg^{2+}$, $Zn^{2+}$, $Ca^{2+}$, $Ce^{3+}$, $Cd^{2+}$, $Pr^{3+}$, $Nd^{3+}$, $Eu^{3+}$, $Gd^{3+}$, $Sm^{3+}$, $Mn^{2+}$, $Cr^{2+}$, $In^{3+}$, $V^{2+}$, $Fe^{2+}$, $Pb^{4+}$, $Li^{1+}$, $Co^{2+}$, $Sc^{3+}$, $Zn^{2+}$, $Cu^{2+}$, $U^{6+}$, $Hf^{4+}$, $Mo^{3+}$, $Ni^{2+}$, $Nb^{4+}$, $Ti^{3+}$, $W^{4+}$, $Mo^{4+}$, $Fe^{3+}$, $Mn^{3+}$, $V^{3+}$, $Re^{4+}$, $Ir^{4+}$, $Ru^{4+}$, $W^{5+}$, $Ta^{5+}$, $Cr^{3+}$, $Ga^{3+}$, $Co^{3+}$, $Mo^{5+}$, $Ni^{3+'}$, $Sb^{5+}$, $W^{6+}$, $Nb^{5+}$, $Mo^{6+}$, $Fe^{4+}$, $Re^{5+}$, $V^{4+}$, $Te^{6+}$, $V^{5+}$, $Cu^{3+}$, $Al^{3+}$, $Mn^{4+}$, $Ge^{4+}$, $Y^{3+}$, $Gd^{3+}$, $Dy^{3+}$, $Ho^{3+}$, $Er^{3+}$, $Yb^{3+}$, $Tb^{3+}$ und $Lu^{3+}$ enthalten. Neben diesen dielektrische Materialien kann das kapazitive Einkoppelmittel 6 zusätzlich noch Sinterhilfsmittel enthalten. Die Menge an zusätzlichem Sinterhilfsmittel liegt vorzugsweise zwischen 0.01 und 5 Gew.-% bezogen auf die Menge an dielektrischem Material. Bevorzugt enthält das kapazitive Einkoppelmitteln 6 als zusätzliches Sinterhilfsmittel $SiO_2$.

Es ist ganz besonders bevorzugt, dass das kapazitive Einkoppelmittel 6 $BaTiO_3$ dotiert mit $Nb^{5+}$, $Mn^{2+}$ und $Co^{2+}$ enthält. Eine weitere besonders bevorzugte Ausführungsform sieht vor, dass das kapazitive Einkoppelmittel 6 $BaTiO_3$ dotiert mit $Y^{3+}$, $W^{6+}$, $Mo^{6+}$ und $Mn^{2+}$ sowie als zusätzliches Sinterhilfsmittel $SiO_2$ enthält. Ein kapazitives Einkoppelmittel 6 mit einem der beiden dielektrischen Materialien zeichnet sich durch eine hohe Festigkeit, einen niedrigen Kathodenfall und einer Curie-Temperatur von 125 °C aus. Im Vergleich zu einer kommerziell erhältlichen Kaltkathodenlampe mit metallischen Elektroden ist der Kathodenfall einer Gasentladungslampe, welche als kapazitives Einkoppelmittel 6 $BaTiO_3$ dotiert mit $Nb^{5+}$, $Mn^{2+}$ und $Co^{2+}$ enthält, 20 % niedriger. Bei einer Gasentladungslampe, welche als kapazitives Einkoppelmittel 6 $BaTiO_3$ dotiert mit $Y^{3+}$, $W^{6+}$, $Mo^{6+}$ und $Mn^{2+}$ sowie als zusätzliches Sinterhilfsmittel $SiO_2$ enthält, ist der Kathodenfall im Vergleich zu einer kommerziell erhältlichen Kaltkathodenlampe mit metallischen Elektroden um 40 % reduziert.

## Patentansprüche

1. Flüssigkristallbildschirm ausgestattet mit einem Hintergrundbeleuchtungssystem, welches wenigstens eine Gasentladungslampe mit einem Entladungsgefäß (5) und wenigstens einem kapazitiven Einkoppelmittel (6) mit einem dielektrischen Material der Zusammensetzung $[A'_{a1}^{n1+}\ A''_{a2}^{n2+}...\ A^{n'}_{an}^{nn+}]\ [B'_{b1}^{m1+}\ B''_{b2}^{m2+}....B^{m'}_{bm}^{mn+}]O_3$ enthält, wobei die Kationen $A'_{a1}^{n1+}\ A''_{a2}^{n2+}...A^{n'}_{an}^{nn+}$ mindestens ein oder mehrere Kationen ausgewählt aus der Gruppe $Ba^{2+}$, $Pb^{2+}$, $Sr^{2+}$ und $Ca^{2+}$ sowie gegebenenfalls ein oder mehrere Kationen ausgewählt aus der Gruppe $Cs^{1+}$, $Rb^{1+}$, $Tl^{1+}$, $K^{1+}$, $Pb^{2+}$, $Ag^{1+}$, $Sr^{2+}$, $Na^{1+}$, $Bi^{3+}$, $La^{3+}$, $Mg^{2+}$, $Zn^{2+}$, $Ca^{2+}$, $Ce^{3+}$, $Cd^{2+}$, $Pr^{3+}$, $Nd^{3+}$, $Eu^{3+}$, $Gd^{3+}$ und $Sm^{3+}$ umfassen, die Kationen $B'_{b1}^{m1+}\ B''_{b2}^{m2+}....B^{m'}_{bm}^{mn+}$ mindestens ein oder mehrere Kationen ausgewählt aus der Gruppe $Ti^{4+}$, $Zr^{4+}$ und $Sn^{4+}$ sowie gegebenenfalls ein oder mehrere Kationen aus der Gruppe $Mn^{2+}$, $Cr^{2+}$, $In^{3+}$, $V^{2+}$, $Fe^{2+}$, $Pb^{4+}$, $Li^{1+}$, $Co^{2+}$, $Sc^{3+}$, $Zn^{2+}$, $Cu^{2+}$, $U^{6+}$, $Mg^{2+}$, $Hf^{4+}$, $Mo^{3+}$, $Ni^{2+}$, $Nb^{4+}$, $Ti^{3+}$, $W^{4+}$, $Mo^{4+}$, $Fe^{3+}$, $Mn^{3+}$, $V^{3+}$, $Re^{4+}$, $Ir^{4+}$, $Ru^{4+}$, $W^{5+}$, $Ta^{5+}$, $Cr^{3+}$, $Ga^{3+}$, $Co^{3+}$, $Mo^{5+}$, $Ni^{3+}$, $Sb^{5+}$, $W^{6+}$, $Nb^{5+}$, $Mo^{6+}$, $Fe^{4+}$, $Re^{5+}$, $V^{4+}$, $Te^{6+}$, $V^{5+}$, $Cu^{3+}$, $Al^{3+}$, $Mn^{4+}$, $Ge^{4+}$, $Y^{3+}$, $Gd^{3+}$, $Dy^{3+}$, $Ho^{3+}$, $Er^{3+}$, $Yb^{3+}$, $Tb^{3+}$ und $Lu^{3+}$ umfassen,

$$0.98 \le a_1 + a_2 + .... + a_n \le 1.02,$$
$$0.98 \le b_1 + b_2 + .... + b_m \le 1.02,$$
$$a_1 + a_2 + .... + a_n + b_1 + b_2 + .... + b_m \le 2,$$
$$a_1*n^1 + a_2*n^2 + ... + a_n*n^n + b_1*m^1 + b_2*m^2 + ... + b_m*m^m \le 6 \text{ ist.}$$

2. Flüssigkristallbildschirm nach Anspruch 1, **dadurch gekennzeichnet,** **dass** die Kationen $A'_{a1}{}^{n1+}$ $A''_{a2}{}^{n2+}...A^{n'}{}_{an}{}^{nn+}$ $Ba^{2+}$ umfassen und die Kationen $B'_{b1}{}^{m1+}$ $B''_{b2}{}^{m2+}....$ $B^{m'}{}_{bm}{}^{mn+}$ $Nb^{5+}$, $Co^{2+}$ und $Mn^{3+}$ umfassen.

3. Flüssigkristallbildschirm nach Anspruch 1, **dadurch gekennzeichnet,** **dass** das kapazitive Einkoppelmittel (6) zusätzlich ein Sinterhilfsmittel enthält.

4. Flüssigkristallbildschirm nach Anspruch 3, **dadurch gekennzeichnet,** **dass** Sinterhilfsmittel $SiO_2$ ist.

5. Flüssigkristallbildschirm nach Anspruch 1, **dadurch gekennzeichnet,** **dass** die Kationen $A'_{a1}{}^{n1+}$ $A''_{a2}{}^{n2+}...A^{n'}{}_{an}{}^{nn+}$ $Ba^{2+}$ und $Mg^{2+}$ umfassen, die Kationen $B'_{b1}{}^{m1+}$ $B''_{b2}{}^{m2+}....B^{m'}{}_{bm}{}^{mn+}$ $Y^{3+}$, $W^{6+}$, $Mo^{6+}$ und $Mn^{2+}$ umfassen und die zusätzliche Verbindung $SiO_2$ ist.

6. Hintergrundbeleuchtungssystem, welches wenigstens eine Gasentladungslampe mit einem Entladungsgefäß und wenigstens einem kapazitiven Einkoppelmittel (6) mit einem dielektrischen Material der Zusammensetzung $[A'_{a1}{}^{n1+}$ $A''_{a2}{}^{n2+}...A^{n'}{}_{an}{}^{nn+}]$ $[B'_{b1}{}^{m1+}$ $B''_{b2}{}^{m2+}....B^{m'}{}_{bm}{}^{mn+}]O_3$ enthält, wobei die Kationen $A'_{a1}{}^{n1+}$ $A''_{a2}{}^{n2+}...A^{n'}{}_{an}{}^{nn+}$ mindestens ein oder mehrere Kationen ausgewählt aus der Gruppe $Ba^{2+}$, $Pb^{2+}$, $Sr^{2+}$ und $Ca^{2+}$ sowie gegebenenfalls ein oder mehrere Kationen ausgewählt aus der Gruppe $Cs^{1+}$, $Rb^{1+}$, $Tl^{1+}$, $K^{1+}$, $Pb^{2+}$, $Ag^{1+}$, $Sr^{2+}$, $Na^{1+}$, $Bi^{3+}$, $La^{3+}$, $Mg^{2+}$, $Zn^{2+}$, $Ca^{2+}$, $Ce^{3+}$, $Cd^{2+}$, $Pr^{3+}$, $Nd^{3+}$, $Eu^{3+}$, $Gd^{3+}$ und $Sm^{3+}$ umfassen, die Kationen $B'_{b1}{}^{m1+}$ $B''_{b2}{}^{m2+}....B^{m'}{}_{bm}{}^{mn+}$ mindestens ein oder mehrere Kationen ausgewählt aus der Gruppe $Ti^{4+}$, $Zr^{4+}$ und $Sn^{4+}$ sowie gegebenenfalls ein oder mehrere Kationen aus der Gruppe $Mn^{2+}$, $Cr^{2+}$, $In^{3+}$, $V^{2+}$, $Fe^{2+}$, $Pb^{4+}$, $Li^{1+}$, $Co^{2+}$, $Sc^{3+}$, $Zn^{2+}$, $Cu^{2+}$, $U^{6+}$, $Mg^{2+}$, $Hf^{4+}$, $Mo^{3+}$, $Ni^{2+}$, $Mb^{4+}$, $Ti^{3+}$,

$W^{4+}$, $Mo^{4+}$, $Fe^{3+}$, $Mn^{3+}$, $V^{3+}$, $Re^{4+}$, $Ir^{4+}$, $Ru^{4+}$, $W^{5+}$, $Ta^{5+}$, $Cr^{3+}$, $Ga^{3+}$, $Co^{3+}$, $Mo^{5+}$, $Ni^{3+}$, $Sb^{5+}$, $W^{6+}$, $Mb^{5+}$, $Mo^{6+}$, $Fe^{4+}$, $Re^{5+}$, $V^{4+}$, $Te^{6+}$, $V^{5+}$, $Cu^{3+}$, $Al^{3+}$, $Mn^{4+}$, $Ge^{4+}$, $Y^{3+}$, $Gd^{3+}$, $Dy^{3+}$, $Ho^{3+}$, $Er^{3+}$, $Yb^{3+}$, $Tb^{3+}$ und $Lu^{3+}$ umfassen,

$$0.98 \le a_1 + a_2 + .... + a_n \le 1.02,$$
$$0.98 \le b_1 + b_2 + .... + b_m \le 1.02,$$
$$a_1 + a_2 + .... + a_n + b_1 + b_2 + .... b_m = 2,$$
$$a_1*n^1 + a_2*n^2 + ... + a_n*n^n + b_1*m^1 + b_2*m^2 + ... + b_m*m^m = 6 \text{ ist.}$$

7. Gasentladungslampe mit einem Entladungsgefäß und wenigstens einem kapazitiven Einkoppelmittel (6) mit einem dielektrischen Material der Zusammensetzung $[A'_{a1}{}^{n1+}$ $A''_{a2}{}^{n2+}...A^{n'}{}_{an}{}^{nn+}]$ $[B'_{b1}{}^{m1+}$ $B''_{b2}{}^{m2+}....B^{m'}{}_{bm}{}^{mn+}]O_3$ enthält, wobei die Kationen $A'_{a1}{}^{n1+}$ $A''_{a2}{}^{n2+}...A^{n'}{}_{an}{}^{nn+}$ mindestens ein oder mehrere Kationen ausgewählt aus der Gruppe $Ba^{2+}$, $Pb^{2+}$, $Sr^{2+}$ und $Ca^{2+}$ sowie gegebenenfalls ein oder mehrere Kationen ausgewählt aus der Gruppe $Cs^{1+}$, $Rb^{1+}$, $Tl^{1+}$, $K^{1+}$, $Pb^{2+}$, $Ag^{1+}$, $Sr^{2+}$, $Na^{1+}$, $Bi^{3+}$, $La^{3+}$, $Mg^{2+}$, $Zn^{2+}$, $Ca^{2+}$, $Ce^{3+}$, $Cd^{2+}$, $Pr^{3+}$, $Nd^{3+}$, $Eu^{3+}$, $Gd^{3+}$ und $Sm^{3+}$ umfassen, die Kationen $B'_{b1}{}^{m1+}$ $B''_{b2}{}^{m2+}....B^{m'}{}_{bm}{}^{mn+}$ mindestens ein oder mehrere Kationen ausgewählt aus der Gruppe $Ti^{4+}$, $Zr^{4+}$ und $Sn^{4+}$ sowie gegebenenfalls ein oder mehrere Kationen aus der Gruppe $Mn^{2+}$, $Cr^{2+}$, $In^{3+}$, $V^{2+}$, $Fe^{2+}$, $Pb^{4+}$, $Li^{1+}$, $Co^{2+}$, $Sc^{3+}$, $Zn^{2+}$, $Cu^{2+}$, $U^{6+}$, $Mg^{2+}$, $Hf^{4+}$, $Mo^{3+}$, $Mi^{2+}$, $Mb^{4+}$, $Ti^{3+}$, $W^{4+}$, $Mo^{4+}$, $Fe^{3+}$, $Mn^{3+}$, $V^{3+}$, $Re^{4+}$, $Ir^{4+}$, $Ru^{4+}$, $W^{5+}$, $Ta^{5+}$, $Cr^{3+}$, $Ga^{3+}$, $Co^{3+}$, $Mo^{5+}$, $Ni^{3+'}$, $Sb^{5+}$, $W^{6+}$, $Nb^{5+}$, $Mo^{6+}$, $Fe^{4+}$, $Re^{5+}$, $V^{4+}$, $Te^{6+}$, $V^{5+}$, $Cu^{3+}$, $Al^{3+}$, $Mn^{4+}$, $Ge^{4+}$, $Y^{3+}$, $Gd^{3+}$, $Dy^{3+}$, $Ho^{3+}$, $Er^{3+}$, $Yb^{3+}$, $Tb^{3+}$ und $Lu^{3+}$ umfassen,

$$0.98 \le a_1 + a_2 + .... + a_n \le 1.02,$$
$$0.98 \le b_1 + b_2 + .... b_m \le 1.02,$$
$$a_1 + a_2 + .... + a_n + b_1 + b_2 + .... + b_m \le 2,$$
$$a_1*n^1 + a_2*n^2 + ... + a_n*n^n + b_1*m^1 + b_2*m^2 + ... + b_m*m^m \le 6 \text{ ist.}$$

FIG. 1

FIG. 2

FIG. 3

**Europäisches Patentamt**

# EUROPÄISCHER RECHERCHENBERICHT

**Nummer der Anmeldung**

EP 02 10 0572

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| P,X | EP 1 137 050 A (PHILIPS CORP INTELLECTUAL PTY ;KONINKL PHILIPS ELECTRONICS NV (NL)) 26. September 2001 (2001-09-26) * Zusammenfassung; Abbildungen 1-7 * * Absätze '0015!,'0017!,'0020!-'0029! * | 1,2,6,7 | H01J65/04 H01J61/067 |
| X | WO 98 26447 A (PATRA PATENT TREUHAND ;HITZSCHKE LOTHAR (DE); VOLLKOMMER FRANK (DE) 18. Juni 1998 (1998-06-18) | 1,6,7 | |
| Y | * Seite 4, Zeile 8 - Seite 9, Zeile 8; Abbildungen 1A-2B * | 2-5 | |
| X | EP 1 087 422 A (PHILIPS CORP INTELLECTUAL PTY ;KONINKL PHILIPS ELECTRONICS NV (NL)) 28. März 2001 (2001-03-28) * Zusammenfassung; Abbildungen 1-3 * | 6,7 | |
| Y | * Absätze '0014!-'0016! * | 1-5 | |
| D,X | DE 199 15 616 A (PHILIPS CORP INTELLECTUAL PTY) 12. Oktober 2000 (2000-10-12) * Zusammenfassung; Ansprüche 2,3,5 * | 6,7 | |
| Y | * Seite 2, Zeile 15 - Seite 3, Zeile 40; Tabellen 1,2 * | 1,2,5 | |
| Y | HASHIMOTO K ET AL: "HIGH-LUMINANCE AND HIGH-EFFICACY ELECTRIC-FIELD-COUPLED DISCHARGE LAMP FOR LCD BACKLIGHTING" 1999 SID INTERNATIONAL SYMPOSIUM DIGEST OF TECHNICAL PAPERS. SAN JOSE, CA, MAY 18 - 20, 1999, SID INTERNATIONAL SYMPOSIUM DIGEST OF TECHNICAL PAPERS, SAN JOSE, CA: SID, US, Bd. 30, 18. Mai 1999 (1999-05-18), Seiten 760-763, XP000894817 * Zusammenfassung; Abbildungen 1-3,54 * | 1 | |

**RECHERCHIERTE SACHGEBIETE (Int.Cl.7)**

H01J

-/--

.

Der vorliegende Recherchenbericht wurde für alle Patentansprüche erstellt

| Recherchenort | Abschlußdatum der Recherche | Prüfer |
|---|---|---|
| MÜNCHEN | 9. August 2002 | Lang, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**Europäisches Patentamt**

## EUROPÄISCHER RECHERCHENBERICHT

Nummer der Anmeldung

EP 02 10 0572

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 1 013 625 A (MURATA MANUFACTURING CO) 28. Juni 2000 (2000-06-28) * Zusammenfassung; Abbildungen 4,5 * | 6,7 | |
| Y | * Absätze '0013!-'0059!; Ansprüche 6,8,10,11 * | 1-5 | |
| Y | US 6 226 250 B1 (TSAI CHING-HSIANG ET AL) 1. Mai 2001 (2001-05-01) * Zusammenfassung; Anspruch 1 * * Spalte 3, Zeile 1 - Spalte 28, Zeile 58 * | 1-5 | |
| Y | EP 0 782 156 A (PHILIPS PATENTVERWALTUNG ;PHILIPS ELECTRONICS NV (NL)) 2. Juli 1997 (1997-07-02) * Zusammenfassung; Anspruch 5 * | 1-5 | |
| Y | US 5 720 859 A (EVANS ANTHONY ET AL) 24. Februar 1998 (1998-02-24) * Spalte 4, Zeile 25 - Spalte 5, Zeile 33 * | 1-5 | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| MÜNCHEN | 9. August 2002 | Lang, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie,übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 02 10 0572

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-08-2002

| Im Recherchenbericht angeführtes Patentdokument | | | Datum der Veröffentlichung | Mitglied(er) der Patentfamilie | | Datum der Veröffentlichung |
|---|---|---|---|---|---|---|
| EP 1137050 | A | | 26-09-2001 | DE | 10014407 A1 | 27-09-2001 |
| | | | | CN | 1319876 A | 31-10-2001 |
| | | | | EP | 1137050 A1 | 26-09-2001 |
| | | | | JP | 2001291492 A | 19-10-2001 |
| | | | | US | 2001024090 A1 | 27-09-2001 |
| WO 9826447 | A | | 18-06-1998 | DE | 19651552 A1 | 18-06-1998 |
| | | | | AT | 219861 T | 15-07-2002 |
| | | | | CA | 2246255 A1 | 18-06-1998 |
| | | | | CN | 1210620 A | 10-03-1999 |
| | | | | WO | 9826447 A1 | 18-06-1998 |
| | | | | DE | 59707598 D1 | 01-08-2002 |
| | | | | EP | 0883897 A1 | 16-12-1998 |
| | | | | HU | 9900333 A2 | 28-05-1999 |
| | | | | JP | 2000512070 T | 12-09-2000 |
| | | | | US | 6157145 A | 05-12-2000 |
| EP 1087422 | A | | 28-03-2001 | DE | 19945758 A1 | 29-03-2001 |
| | | | | CN | 1293448 A | 02-05-2001 |
| | | | | EP | 1087422 A2 | 28-03-2001 |
| | | | | JP | 2001110363 A | 20-04-2001 |
| DE 19915616 | A | | 12-10-2000 | DE | 19915616 A1 | 12-10-2000 |
| | | | | CN | 1272680 A | 08-11-2000 |
| | | | | EP | 1043751 A1 | 11-10-2000 |
| | | | | JP | 2000306547 A | 02-11-2000 |
| | | | | US | 6417621 B1 | 09-07-2002 |
| EP 1013625 | A | | 28-06-2000 | JP | 2000191371 A | 11-07-2000 |
| | | | | EP | 1013625 A2 | 28-06-2000 |
| | | | | US | 6380118 B1 | 30-04-2002 |
| US 6226250 | B1 | | 01-05-2001 | TW | 440046 Y | 07-06-2001 |
| EP 0782156 | A | | 02-07-1997 | DE | 19546237 A1 | 19-06-1997 |
| | | | | EP | 0782156 A2 | 02-07-1997 |
| | | | | JP | 9205036 A | 05-08-1997 |
| | | | | US | 5790367 A | 04-08-1998 |
| US 5720859 | A | | 24-02-1998 | AU | 3293197 A | 05-01-1998 |
| | | | | EP | 0902952 A1 | 24-03-1999 |
| | | | | JP | 2000512078 T | 12-09-2000 |
| | | | | TW | 378331 B | 01-01-2000 |
| | | | | WO | 9747018 A1 | 11-12-1997 |

Für nähere Einzelheiten zu diesem Anhang : siehe Amtsblatt des Europäischen Patentamts, Nr.12/82

EPO FORM P0461